# EUROPÄISCHE PATENTSCHRIFT

(11) **EP 2 165 746 B1**
(45) Veröffentlichungstag und Bekanntmachung des Hinweises auf die Patenterteilung: **12.10.2016**
(21) Anmeldenummer: 09168827.5
(22) Anmeldetag: 27.08.2009
(51) Int. Cl.: B01D 25/127, B01D 25/172, B01D 25/30, B01D 25/32

(54) **Verfahren und Vorrichtung zur Fest-Flüssig-Trennung von Stoffgemischen und Suspensionen**
Method and device for solid-liquid separation of material mixtures and suspensions
Procédé et dispositif de séparation solide-liquide de mélanges de matière et suspensions

(30) Priorität: 15.09.2008 DE 102008047427
(43) Veröffentlichungstag der Anmeldung: 24.03.2010
(73) Patentinhaber: Bähr, Albert, 66564 Ottweiler (DE)
(72) Erfinder: Bähr, Albert, 66564 Ottweiler (DE)
(74) Vertreter: Weickmann & Weickmann PartmbB

(56) Entgegenhaltungen:
- EP-A- 0 019 176
- EP-A- 0 053 250
- EP-A- 0 264 899
- EP-A- 0 714 687
- EP-A- 0 827 767
- EP-A1- 0 982 058
- EP-A2- 0 063 991
- DE-A1- 3 635 766
- DE-A1- 3 914 661
- DE-A1- 4 011 776
- DE-C1- 19 900 187
- JP-A- 8 000 918

## Beschreibung

### Technisches Gebiet

Die Erfindung betrifft ein Verfahren zur Fest-Flüssig-Trennung von Stoffgemischen und Suspensionen, bei welchem das Stoffgemisch unter Druck in eine mindestens eine Filterfläche aufweisende geschlossene Kammer eingespeist und in der Kammer ein die Abtrennung der Flüssigphase herbeiführender hydrostatischer Druck aufgebaut wird, wobei nach erfolgter Abtrennung der Flüssigphase zum Abfördern des hergestellten Filterkuchens die Kammer geöffnet und die Filterfläche mit dem Filterkuchen aus der Kammer herausbefördert wird. Ferner betrifft die Erfindung eine Vorrichtung zur Durchführung dieses Verfahrens.

### Stand der Technik

Es ist allgemein bekannt, Stoffgemische und Suspensionen zur Abtrennung der flüssigen Phase in Kammerfilterpressen zu behandeln. Beispielsweise werden Schlämme und ähnliche Substanzen, wie der in Abwasserkläranlagen anfallende Schlamm nach Zusatz organischer oder anorganischer Flockungsmittel oder Filterhilfsmittel, auf diese Weise entwässert. Bei Kammerfilterpressen der üblichen Bauart wird der Schlamm in allseitig geschlossene Filterkammern eingespeist, wobei zur Entwässerung des Stoffgemisches mittels Pumpen mit hohem Druck solange nachgepumpt wird, bis der gewünschte Gehalt an Trockensubstanz erreicht ist. Die in dem Stoffgemisch oder Suspension enthaltene flüssige Phase wird hierbei durch die aus Filtermaterial bestehenden Trennwandungen der einzelnen Filterkammern abgeführt. Nachteil bekannter Kammerfilterpressen dieser Bauart und der dazugehörigen Verfahrensweise bei Abtrennung der Flüssigphase ist es, dass mit sehr hohem technischen Aufwand der Wirkungsgrad, mit welchem der Druck auf das Stoffgemisch oder Suspension, von welchem die Flüssigphase abgetrennt werden soll, übertragen wird, in Förderrichtung von Kammer zu Kammer abnimmt. Weiterer Nachteil der bekannten Kammerfilterpressen besteht in der diskontinuierlichen Arbeitsweise, da beim Öffnen der Filterkammern die Zufuhr des Stoffgemisches unterbrochen werden muss. Hinzu kommt, dass die gesamte Abtrennung der Flüssigphase einschließlich einer Vorentwässerung bei sehr niedrigem Druck in einer Kammer erfolgt, die für hohe Drücke ausgelegt ist, so dass diese ausgesprochen unwirtschaftlich genutzt wird.

Dokument EP95118363, das als nächstliegender Stand der Technik angesehen wird, offenbart ein dreistufiges Trennungsverfahren.

### Darstellung der Erfindung

Ausgehend von diesem Stand der Technik liegt der Erfindung die Aufgabe zugrunde, ein vollständig neuartiges Verfahren zur Fest-Flüssig-Trennung und eine zur Durchführung dieses Verfahrens geeignete Vorrichtung zu schaffen, bei welcher mit geringem technischem Aufwand ein erheblich verbesserter Wirkungsgrad und zusätzlich ein wesentlich verbesserter Durchsatz erreicht wird.

Bei einem Verfahren der eingangs genannten Art wird diese Aufgabe im wesentlichen dadurch gelöst, dass das Stoffgemisch zunächst mittels hydrostatischem Druck von etwa bis zu 0,2 bar behandelt wird, wobei 80 bis 90 % des eingespeisten Volumens als Filtrat abgeführt wird, dass anschließend das eingedickte Restvolumen abgezogen und mit einem Druck bis zu 5 bar in der geschlossenen Kammer weiterbehandelt wird, und dass durch Verringerung des Volumens der Kammer abschließend mit einem Druck von bis zu 50 bar das restliche Filtrat abgetrennt wird.

Durch diese Verfahrensweise wird der Vorteil erzielt, dass die jeweilige Stufe der Abtrennung der Flüssigphase in einer optimal hierzu abgestimmten Weise erfolgen kann, so dass die für eine Hochdruckbehandlung ausgelegten Kammern aufgrund des bereits erheblich verringerten Volumens des Stoffgemisches lediglich zur Hochdruckabtrennung genutzt werden.

Besonders bevorzugt ist es, bei der Behandlung mit hydrostatischem Druck das Stoffgemisch kontinuierlich einzuspeisen und die weitere Behandlung taktweise durchzuführen. Hierdurch werden die Vorzüge kontinuierlicher Systeme mit dem hohen Entwässerungsdruck diskontinuierlicher Systeme kombiniert, so dass eine optimale Arbeitsweise erreicht wird.

Bei einer besonders bevorzugten Ausführungsform nach der Erfindung wird in der geschlossenen Kammer nach der Hochdruckbehandlung der erhaltene Filterkuchen gewaschen und erneut unter Hochdruck die verwendete Waschflüssigkeit abgetrennt. Durch diese Merkmale ist das Verfahren nach der Erfindung besonders geeignet, bei Stoffgemischen Anwendung zu finden, bei welchen der Filterkuchen in einer gewünschten Reinheit des Stoffgemisches das angestrebte Endprodukt ist. Hierzu gibt es zahlreiche Beispiele in der chemischen und pharmazeutischen Industrie.

Eine besonders bevorzugte Ausführungsform nach der Erfindung kann dadurch geschaffen werden, dass die Trennung bei hydrostatischem Druck in einer Stufe und die Behandlung des abgezogenen Restvolumens in mehreren parallelen, als Pressdruckkammern ausgebildeten Kammern gleichzeitig durchgeführt wird. Hierdurch wird es möglich, das Stoffgemisch kontinuierlich in die erste Stufe einzuleiten und wegen der starken Verringerung des Gesamtvolumens in der ersten Stufe kann die weitere Abtrennung der Flüssigphase taktweise in den parallelen Press-Druck-Kammern erfolgen. Darüber hinaus ist auf diese Weise eine einfache Anpassung an die Kapazität, d.h. den gewünschten Durchsatz, möglich.

Im Einzelnen ist es von Vorteil, dass die Press-Druck-Kammern nach Beendigung der Fest-Flüssig-Trennung gleichzeitig geöffnet werden und der erhaltene Filterkuchen mittels eines beweglichen Filterbandes ausgetragen wird. Hierdurch wird die Taktzeit der diskontinuierlich arbeitenden Verfahrensstufe erheblich verkürzt und eine besonders wirtschaftliche Konstruktion geschaffen.

Im Einzelnen ist es hierbei von Vorteil, dass der Feststoffkuchen horizontal durch das Filterband aus der oder den Press-Druck-Kammern ausgetragen wird.

Ferner ist es bevorzugt, nach dem Austragen des Feststoffkuchens das Filterband zu waschen.

Eine praktische Verfahrensweise nach der Erfindung ist dadurch gekennzeichnet, dass die Schaltzeit zum Öffnen der Press-Druck-Kammern, zum Austragen des Feststoffkuchens, zum Waschen des Filterbandes und erneutem Schließen der Press-Druck-Kammern etwa 30 Sekunden beträgt.

Weiterer Gegenstand der Erfindung ist eine Vorrichtung zur Durchführung des oben beschriebenen Verfahrens, welche die folgenden Merkmale aufweist:

Eine vertikale Filtrationskammer mit einer kontinuierlichen Einspeisung des zu trennenden Stoffgemisches;
eine Pumpvorrichtung zum chargenweisen Abziehen des eingedickten Restvolumens aus der Filtrationskammer und zum Erzeugen eines Pumpendrucks bis zu etwa 5 bar, und
mindestens eine geschlossene, im Volumen veränderbare Press-Druck-Kammer, welche eine oder mehrere Verbindungsleitungen zur Pumpvorrichtung aufweist.

Eine vorteilhafte Weiterbildung der Erfindung kann dadurch geschaffen werden, dass die Filtrationskammer aus einem feststehenden Außenzylinder und einem inneren drehbaren Filterkorb besteht, wobei die beiden Zylinder unterschiedliche Durchmesser aufweisen und zwischen sich die geschlossene Filtrationskammer bilden.

Der Filterkorb weist bevorzugt einen gelochten Mantel auf, welcher mit einem Filtertuch belegt ist.

Im Einzelnen ist es bevorzugt, dass am Filterkorbzylinder ein äußerer Feststoffabstreicher und eine innere Kontaktbürste vorgesehen sind. Insbesondere durch die Kontaktbürsten wird das Entwässerungsverhalten des Stoffgemisches erheblich verbessert, ohne dass beispielsweise bei Abwässerschlämmen die Flockung zerstört wird, da diese Bürsten auf der Filtratseite angeordnet sind.

Bevorzugt ist ferner ein Waschwasser-Düsenstock vorgesehen, um das Filtertuch bei Betriebsende zu reinigen.

Eine besonders bevorzugte Ausführungsform nach der Erfindung kann dadurch geschaffen werden, dass jede Press-Druck-Kammer als ein in sich geschlossenes kompaktes Bauteil ausgebildet ist. Hierdurch wird eine modulartige Bauweise geschaffen, durch welche es möglich ist, durch einfache Erhöhung der Anzahl derartiger geschlossener Bauteile die Durchsatzleistung dem Bedarf anzupassen.

Folglich besteht eine bevorzugte Ausführungsform der Vorrichtung der Erfindung darin, dass in modularer Bauweise mehrere Press-Druck-Kammern parallel zueinander an eine Stoffgemischeinspeisung von der Pumpvorrichtung angeschlossen sind, und dass ein umlaufendes Filterband durch sämtliche Press-Druck-Kammern hindurchgeführt ist.

Ein weiteres Merkmal nach der Erfindung besteht darin, dass die Pumpvorrichtung als Schneckenpresse ausgebildet ist. Hierdurch wird eine besonders wirtschaftliche Bauweise geschaffen, da eine einfache Schneckenpresse genügt, sämtliche Press-Druck-Kammern zu speisen.

Im Einzelnen kann die Erfindung vorteilhaft dadurch weitergebildet werden, dass jede Press-Druck-Kammer folgende Bestandteile aufweist:

Eine untere feststehende Press-Druck-Platte, eine obere feststehende Gegendruckplatte, eine obere heb- und senkbare Press-Druck-Platte mit einer umlaufenden Dichtung, Zuganker zwischen unterer Press-Druck-Platte und oberer Gegendruckplatte zur Übernahme der Zugkräfte und Hydraulikzylinder zur Bewegung der oberen Press-Druck-Platte gemeinsam mit der Dichtung.

Die Press-Druck-Kammer ist bevorzugt durch die an der oberen heb- und senkbaren Press-Druck-Platte befestigte ringförmige flexible Dichtung umgeben, wobei die Dichtung mittels hydraulischen Vorspannzylindern in Richtung der unteren Press-Druck-Platte beweglich und unter Druck vorspannbar ist. Hierdurch ist es möglich, in Abhängigkeit von dem angewandten Druck bei der Abtrennung der Flüssigphase eine sichere Abdichtung der Press-Druck-Kammer zu gewährleisten, indem der Anpressdruck der Dichtung an die untere feststehende Press-Druck-Platte entsprechend erhöht wird.

Ferner sind bevorzugt Begrenzungszylinder zur Begrenzung der Schließbewegung der Druckplatten vorgesehen.

Um eine Verfahrensweise zu ermöglichen, bei welcher der Feststoffkuchen vor dem Austrag aus den Press-Druck-Kammern nochmals gewaschen wird, ist bevorzugt eine Waschvorrichtung für den Feststoffkuchen in den Press-Druck-Kammern vorgesehen, mittels derer sich eine Waschflüssigkeit in den bereits ausgepressten Feststoffkuchen einleiten lässt, welche durch erneute Hochdruckentwässerung dann wieder abgetrennt wird.

### Kurze Beschreibung der Abbildungen der Zeichnungen

Im Folgenden wird die Erfindung an Hand einer in den Zeichnungen beispielhaft veranschaulichten Ausführungsform näher erläutert. Es zeigt:
FIGUR 1 eine seitliche schematische und teilweise geschnittene Ansicht der Vorrichtung nach der Erfindung;
FIGUR 2 eine Draufsicht auf die Vorrichtung gemäß Figur 1;
FIGUR 3 eine schematische Schnittansicht der Filtrationskammer zur Behandlung des Stoffgemisches mit hydrostatischem Druck;
FIGUR 4 eine Schnittansicht der Filtrationskammer gemäß Figur 3 längs der Linie IV-IV in Figur 3;
FIGUR 5 eine schematische Schnittansicht einer Press-Druck-Kammer in geöffneter Stellung;
FIGUR 6 die Press-Druck-Kammer in einer Seitenansicht;
FIGUR 7 die Press-Druck-Kammer gemäß Figur 5 in geschlossenem Zustand und
FIGUR 8 eine Schnittansicht etwa in der Ebene VIII-VIII von Figur 5.

### Bester Weg zur Ausführung der Erfindung

14

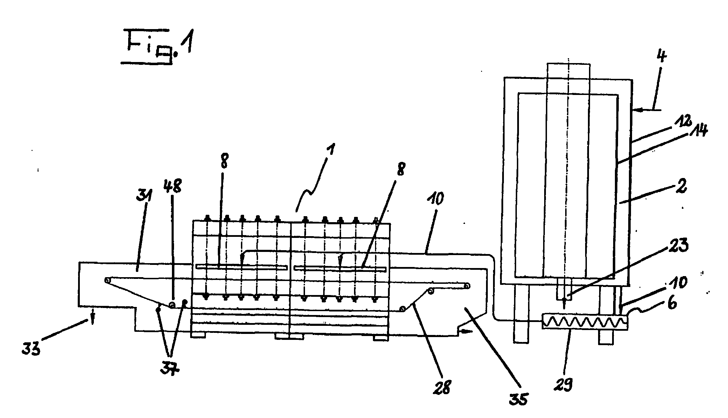

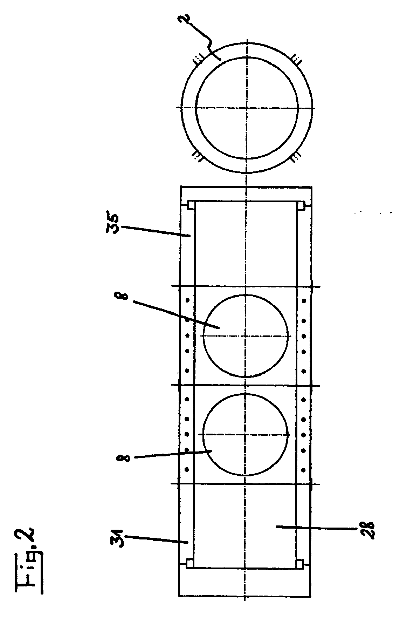

Wie insbesondere in den Figuren 1 und 2 gezeigt, besteht die erfindungsgemäße Vorrichtung 1 zur Durchführung des Verfahrens zur Fest-Flüssig-Trennung von Stoffgemischen und Suspensionen im wesentlichen aus zwei verfahrensmäßig unabhängigen Stufen, nämlich einer Filtrationskammer 2 mit einer Einspeisung 4, welche auf der Feststoffseite an eine Pumpvorrichtung 6 angeschlossen ist, sowie ein oder mehrere horizontal angeordneten Press-Druck-Kammern 8.

In die Filtrationskammer 2 wird während der gesamten Betriebszeit die zu entwässernde Suspension kontinuierlich drucklos eingespeist und mit bis zu 0,2 bar hydrostatischem Druck entwässert, welcher sich aus der vertikalen Ausrichtung der Filtrationskammer 2 ergibt. Bei diesem Vorgang wird bereits 80 bis 90 % des eingespeisten Volumens als Filtrat abgeführt. Die Filtrationskammer 2 bleibt während der gesamten Betriebszeit geschlossen und die Abtrennung der Flüssigphase wird nicht unterbrochen. Das eingedickte Restvolumen wird aus der Filtrationskammer 2 abgezogen und mit einem Pumpendruck bis zu 5 bar mittels der Pumpvorrichtung 6 in die Press-Druck-Kammern 8 eingespeist. In den Press-Druck-Kammern 8 wird die Flüssigphase mit bis zu 50 bar Pressdruck abgetrennt. Nach Abschluss der Abtrennung der Flüssigphase oder nach Waschen des Filterkuchens und erneuter Abtrennung der Waschflüssigkeit werden zum Austrag des Kuchens sämtliche Press-Druck-Kammern 8 gleichzeitig geöffnet und der Kuchen wird mittels eines weiter unten näher beschriebenen Filterbandes horizontal aus den Press-Druck-Kammern 8 ausgetragen. Die Schaltzeit zum Öffnen der Press-Druck-Kammern, Austragen des Filterkuchens, Waschen des Filterbandes und erneutem Schließen der Press-Druck-Kammern 8 beträgt lediglich 30 Sekunden.

Die Vorrichtung 1 nach der Erfindung vereinigt in sich die Vorzüge kontinuierlicher Systeme mit dem hohen Entwässerungsdruck diskontinuierlicher Systeme. Das Stoffgemisch wird in die Filtrationskammer 2 eingespeist und gleichzeitig wird aus den Press-Druck-Kammern 8 entwässerter Kuchen ausgetragen. Diese Gleichzeitigkeit von Entwässerung und Kuchenaustrag ist ein kennzeichnendes Merkmal sämtlicher kontinuierlicher Entwässerungssysteme. Die Vorrichtung stellt daher eine kontinuierlich arbeitende Hochdruckpresse dar, bei der während der gesamten Betriebszeit kontinuierlich ohne Unterbrechung in die Filtrationskammer 2 das Stoffgemisch eingespeist und die Flüssigphase abgetrennt wird, während der Kuchen aus den Press-Druck-Kammern 8 taktweise ausgetragen wird. Der Entwässerungsdruck und die Entwässerungszeit in den Press-Druck-Kammern 8 ist entsprechend dem Entwässerungsverhalten des jeweiligen Stoffgemisches frei programmierbar. Während der gesamten Betriebszeit wird jedoch in der Filtrationskammer 2 und in den Press-Druck-Kammern 8 gleichzeitig mit unterschiedlichen Drücken und unterschiedlicher Behandlungszeit die Flüssigphase abgetrennt.

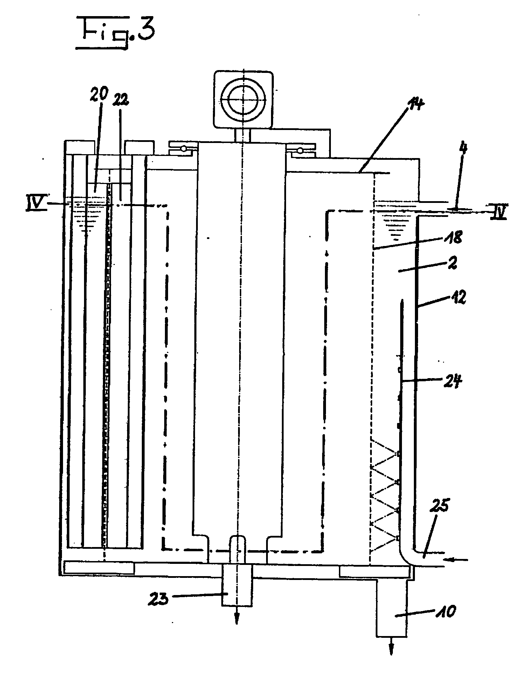

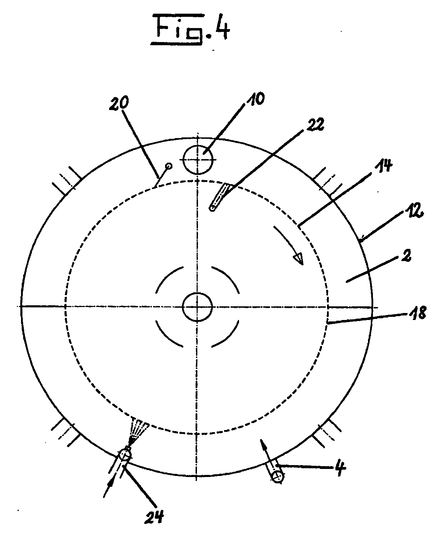

Die in den Figuren 3 und 4 schematisch dargestellte, vertikal ausgerichtete Filtrationskammer 2 besteht aus einem feststehenden Außenzylinder 12 und einem drehbaren inneren Filterkorbzylinder 14. Die Zylinder 12 und 14 weisen unterschiedliche Durchmesser auf und bilden in dem dadurch entstehenden Zwischenraum die geschlossene Filtrationskammer 2. Der Filterkorbzylinder 14 weist einen gelochten Mantel 16 auf, welcher mit einem Filtertuch 18 belegt ist. Ein äußerer Feststoffabstreifer 20 berührt die Außenseite des Filtertuchs 18, wobei auf der Innenseite des Filterkorbzylinders 14 eine Kontaktbürste 22 vorgesehen ist, welche mit ihren Borsten in die Löcher des Mantels 16 eingreift. Der Feststoffabstreifer 20 und die Kontaktbürste 22 erstrecken sich über die gesamte Höhe des Filterkorbzylinders 14. Beim Drehen des Filterkorbzylinders 14 aktivieren und optimieren der Feststoffabstreifer 20 und die Kontaktbürste 22 die Abtrennung der Flüssigphase. Zur Reinigung des Filtertuchs 18 bei Betriebsende ist noch ein Waschwasserdüsenstock 24 vorgesehen, mittels dessen eine Waschflüssigkeit, welche durch eine Waschwasserzuleitung 25 eingespeist wird, gegen das Filtertuch 18 gespritzt werden kann.

Eine Verbindungsleitung 10 dient dazu, das eingedickte Restvolumen aus der Filtrationskammer 2 zu der in Figur 1 schematisch dargestellten Pumpvorrichtung 6 zu leiten. Mit 23 ist ferner in Figur 3 ein Auslass für das Filtrat bezeichnet.

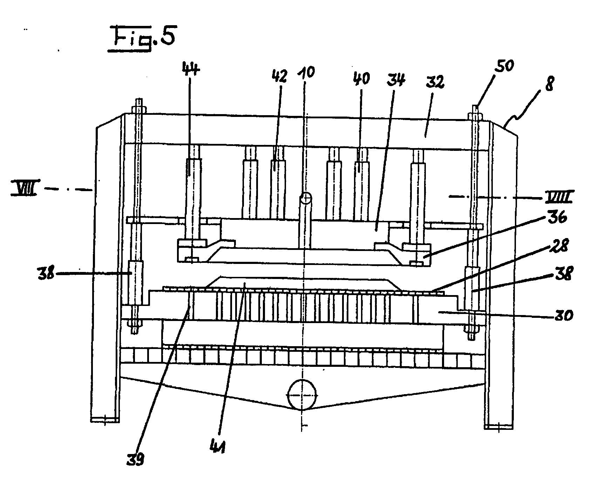

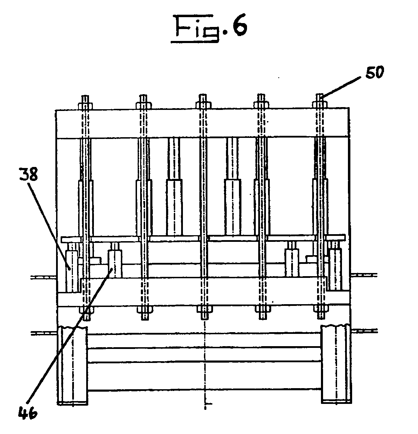

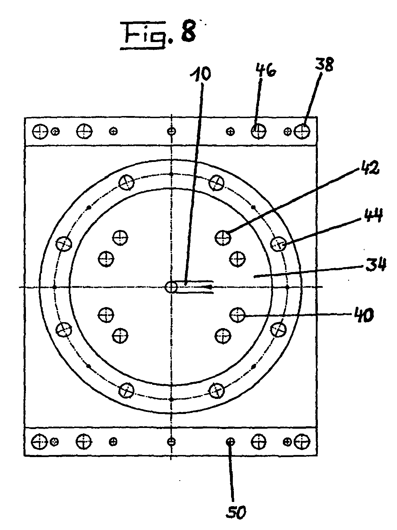

Die in den Figuren 5 bis 8 veranschaulichte Press-Druck-Kammer bildet ein in sich geschlossenes kompaktes Bauteil, welches, wie in den Figuren 1 und 2 gezeigt, modular nebeneinander beliebig angebaut werden kann, um den Durchsatz durch die Vorrichtung 1 entsprechend dem Bedarf zu steigern. Jede Press-Druck-Kammer 8 besteht aus einer unteren feststehenden Press-Druck-Platte 30, einer oberen feststehenden Gegendruckplatte 32, einer oberen heb- und senkbaren Press-Druck-Platte 34, an welcher auf die untere feststehende Press-Druck-Platte 30 eine die Press-Druck-Kammer 8 umgebende Dichtung 36 befestigt ist. Zwischen der unteren feststehenden Press-Druck-Platte 30 und der oberen feststehenden Gegendruckplatte 32 sind Zuganker 50 vorgesehen, welche die beim Pressen der heb- und senkbaren Press-Druckplatte 34 gegen die untere feststehende Press-Druck-Platte 30 erzeugten Zugkräfte aufnehmen.

Durch eine Anzahl von Hydraulikzylindern, nämlich Öffnungszylinder 36, Schließzylinder 40 und Press-Druck-Zylinder 42 wird lediglich die obere Press-Druck-Platte 34 mit der Dichtung 36 bewegt und positioniert.

Über die Oberseite der unteren feststehenden Press-Druck-Platte 30 ist ein umlaufendes Filterband 28 (siehe Figur 1) geführt, welches bei mehreren, in modularen einander nachgeschalteten Press-Druck-Kammern 8 über sämtliche Press-Druck-Platten 30 verläuft. Das Filterband 28 durchläuft nach Verlassen der letzten Press-Druck-Kammer 8 durch eine Antriebs-Waschstation 31, welche den Abwurf 33 für den Filterkuchen enthält. Unterhalb sämtlicher Press-Druck-Kammern 8 wird das Filterband 28 zur Eingangsseite der ersten Press-Druck-Kammer 8 der modularen Reihe in einer Umlenk-Spann-Steuerstation 35 zurückgeführt. Bei jedem Takt des Kuchenaustrags macht das Filterband 28 der Press-Druck-Kammern 8 zwischen der Antriebs-Abwurf-Waschstation 31 und der Umlenk-Spann-Steuerstation 35 nur einen halben Umlauf. Dabei wird das Filterband 28 durch zwei Waschwasserdüsenstöcke 37 in der Station 31 beidseits gereinigt.

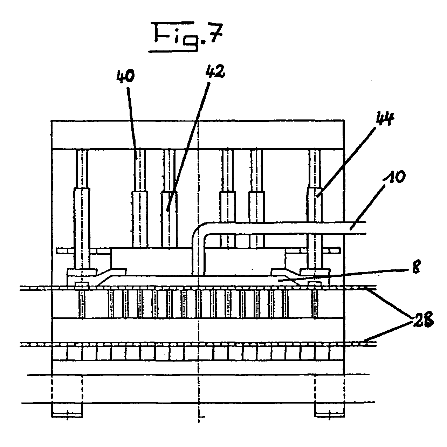

Die Figuren 5 und 7 zeigen die Press-Druck-Kammer 8 in den beiden grundsätzlichen Stellungen, nämlich einmal die geöffnete Stellung gemäß Figur 5, zum Austragen des Filterkuchens und Reinigen der Filterflächen und die geschlossene Stellung gemäß Figur 7, in welcher die Press-Druck-Kammer 8 gefüllt ist und die Abtrennung der Flüssigphase zunächst unter den durch die Pumpeinrichtung 6 erzeugten Druck erfolgt. In der unteren feststehenden Press-Druck-Platte 30, auf welcher das Filterband 28 läuft, sind noch Kanäle 39 ausgebildet, durch welche die innerhalb der Press-Druck-Kammer 8 abgetrennte Flüssigphase abgeführt wird.

Wie ferner insbesondere aus Figur 5 ersichtlich, ist die an der oberen heb- und senkbaren Press-Druck-Platte 34 befestigte ringförmige Dichtung 36, welche die Press-Druck-Kammer 8 im geschlossenen Zustand umgibt, mit hydraulischen Vorspannzylindern 44 verbunden, die sich an der oberen feststehenden Gegendruck-Platte 32 abstützen. Mittels der Vorspannzylinder 44 lässt sich der Anpressdruck der Dichtung 36 auf der Oberseite des Filterbandes 28 entsprechend dem in der Press-Druck-Kammer 8 vorherrschenden Druck beliebig einstellen, so dass eine absolute Dichtigkeit der Press-Druck-Kammer 8 zu jedem Zeitpunkt bzw. bei jedem jeweils herrschenden Druck gewährleistet ist.

Ferner sind noch Begrenzungszylinder 46 vorgesehen, mittels derer der Hub der beweglichen Press-Druck-Platte 34 in Schließrichtung einstellbar ist, so dass während der ersten Phase der Abtrennung der Flüssigkeit in der Press-Druck-Kammer 8 unter dem durch die Pumpeinrichtung 6 gelieferten Druck, bei welcher es sich bevorzugt um eine Schneckenpresse 29 handelt, die Höhe der Press-Druck-Kammer 8 eingestellt werden kann.

Im Folgenden wird die Arbeitsweise der Vorrichtung 1 gemäß den Figuren 1 bis 8 näher erläutert. Figur 5 zeigt die Press-Druck-Kammer 8 im geöffneten Zustand, wobei die Öffnungszylinder 38 die obere heb- und senkbare Press-Druck-Platte 34 mit der Dichtung 36 nach oben angehoben haben. Die Vorspannzylinder 44 für die Dichtung 36 sind ebenfalls entlastet und eingefahren.

Beim Anheben der oberen Press-Druck-Platte 34 wurde zunächst die Dichtung 36 durch die Vorspannzylinder 44 von dem Filterband 28 abgehoben und anschließend die gesamte Press-Druck-Platte 34 mit der Dichtung 36 durch die Öffnungszylinder 38 nach oben bewegt. Gleichzeitig sind die Press-Druck-Zylinder 42 entlastet.

In diesem Zustand gemäß Figur 5 steht die Press-Druck-Kammer 8 bereit, den in einem vorausgehenden Zyklus gebildeten Filterkuchen aus den Press-Druck-Kammern durch Bewegung des Filterbandes 28 auszutragen. Nach Abwurf des Filterkuchens steht dann die in Figur 5 dargestellte Press-Druck-Kammer wieder in dem Zustand gemäß Figur 5, wobei jedoch in den Press-Druck-Kammern 8 kein Filterkuchen enthalten ist, welcher in Figur 5 das Bezugszeichen 41 trägt.

Anschließend wird die Press-Druck-Kammer 8 in den Zustand gemäß Figur 7 überführt, wobei die Press-Druck-Kammern sämtlicher modularer Einheiten geschlossen werden. Zu diesem Zweck werden die Öffnungszylinder 38 entlastet und die Schließzylinder 40 senken die Press-Druck-Platte 34 zusammen mit der Dichtung 36 ab. Hierbei wird der Grad der Absenkung der Druck-Platte 34 durch die Begrenzungszylinder 46 begrenzt. Anschließend werden die Vorspannzylinder 44 unter Druck gesetzt und die Dichtung 36 entsprechend den gegebenen Anforderungen gegen die Oberseite des Filterbandes 28, d.h. quasi gegen die untere feststehende Press-Druck-Platte 30 gedrückt. Die Press-Druck-Kammer 8 steht somit bereit, die in der Filtrationskammer 2 auf ca. 20 bis 10 % des eingespeisten Volumens eingedickte Stoffgemisch aufzunehmen. Während sämtlicher voraus geschilderten Vorgänge erfolgt jedoch die kontinuierliche Einspeisung des Stoffgemisches in die Filtrationskammer 2 und die entsprechende Abtrennung der Flüssigphase. Das eingedickte Restvolumen wird nun durch die Pumpvorrichtung, d.h. die Schneckenpresse 29, aus der Filtrationskammer 2 abgezogen und über die Verbindungsleitung 10 in die einzelnen Press-Druck-Kammern 8 eingespeist und dort unter den durch die Schneckenpresse 29 erzeugten Pumpendruck bis zu ca. 5 bar wird weiterhin die Flüssigphase von dem eingedickten Volumen abgetrennt, wobei das abfallende Filtrat nach unten aus den Press-Druck-Kammern 8 durch die Kanäle 41 unter Zwischenschaltung des Filterbandes 28 abgeführt wird. Danach wird die Verbindungsleitung 10 zur Schneckenpresse 29 durch entsprechende, nicht dargestellte Ventile oder Schieber geschlossen und unter einem Druck bis zu 50 bar wird die endgültige Abtrennung der Flüssigphase durchgeführt, indem durch die Press-Druck-Zylinder 42 die obere heb- und senkbare Press-Druck-Platte 34 in Richtung der unteren feststehenden Press-Druck-Platte 30 gedrückt wird und somit das Volumen der Press-Druck-Kammern 8 entsprechend verkleinert wird. Falls erforderlich, kann hierbei der Anpressdruck der Dichtung 36 durch die Vorspannzylinder 44 erhöht werden.

Nachdem die gewünschte Abtrennung der Flüssigphase in den Press-Druck-Kammern 8 erreicht wurde, werden die Press-Druck-Zylinder 42 entlastet, die Vorspannzylinder 44 entlastet und die Öffnungszylinder 38 betätigt. Danach ist der in Figur 5 dargestellte Zustand wieder erreicht, und die Press-Druck-Kammern 8 stehen somit bereit, für einen erneuten Beginn eines Zyklus, welcher, wie oben beschrieben, mit dem Ausfahren und Abwerfen des hergestellten Filterkuchens 41 beginnt.

Es wird erneut darauf hingewiesen, dass während der gesamten Zeit die Abtrennung der Flüssigphase in der Filtrationskammer kontinuierlich weitergeführt wird.

Es wurde oben stehend eine Ausführungsform der Erfindung in Einzelheiten beschrieben, wobei jedoch dem Fachmann sicher Abänderungen und Abwandlungen offensichtlich sind, die innerhalb des Grundgedankens der Erfindung liegen.

Sämtliche aus der Beschreibung, den Ansprüchen und Zeichnungen hervorgehenden Merkmale und Vorteile der Erfindung, einschließlich konstruktiver Einzelheiten und räumlicher Anordnungen, können sowohl für sich als auch in beliebiger Kombination erfindungswesentlich sein.

### BEZUGSZEICHENSLISTE

**Tabelle 1**

| |
|---|
| 1 = Vorrichtung |
| 2 = Filtrationskammer |
| 4 = Einspeisung |
| 6 = Pumpvorrichtung |
| 8 = Press-Druck-Kammer |
| 10 = Verbindungsleitung |
| 12 = Außenzylinder |
| 14 = Filterkorbzylinder |
| 16 = Mantel |
| 18 = Filtertuch |
| 20 = Feststoffabstreifer |
| 22 = Kontaktbürste |
| 23 = Filtratauslass |
| 24 = Waschwasser-Düsenstock |
| 25 = Waschwasserzuleitung |
| 28 = Filterband |
| 29 = Schneckenpresse |
| 30 = untere, feststehende Press-Druck-Platte |
| 31 = Antriebs-Waschstation |
| 32 = obere, feststehende Gegen-Druck-Platte |
| 33 = Abwurf |
| 34 = heb- und senkbare Press-Druck-Platte |
| 35 = Umlenk-Spann-Steuerstation |
| 36 = Dichtung |
| 37 = Waschwasser-Düsenstöcke |
| 38 = Öffnungszylinder |
| 39 = Kanäle |
| 40 = Schließzylinder |
| 41 = Filterkuchen |
| 42 = Press-Druck-Zylinder |
| 44 = Vorspannzylinder für 36 |
| 46 = Begrenzungszylinder |
| 48 = Waschvorrichtung |
| 50 = Zuganker |

## Patentansprüche

1. Verfahren zur Fest-Flüssig-Trennung von Stoffgemischen und Suspensionen mit
einer kontinuierlich betriebenen Filtrationskammer (2) und
einer oder mehreren diskontinuierlich betriebenen Press-Druck-Kammern (8), bei welchem
a) das Stoffgemisch oder die Suspension kontinuierlich in die Filtrationskammer (2) eingespeist und
dort mittels hydrostatischem Druck von bis zu 0,2 bar behandelt wird, wobei 80 bis 90% des eingespeisten Volumens als Filtrat abgeführt wird und
die Abtrennung der Flüssigphase nicht unterbrochen wird,
b) anschließend das eingedickte Restvolumen durch eine Schneckenpresse (29) abgezogen und
mit einem Druck bis zu 5 bar in eine der Press-Druck-Kammern (8) befördert und
dort weiterbehandelt wird und
c) abschließend durch Verringerung des Volumens der Press-Druck-Kammer (8) mit einem Druck von bis zu 50 bar das restliche Filtrat abgetrennt wird,
wobei die weitere Behandlung stromab der hydrostatischen Filtration in der Press-Druck-Kammer (8) taktweise durchgeführt wird und
während der ganzen Betriebszeit kontinuierlich, ohne Unterbrechung, Stoffgemisch oder Suspension in die Filtrationskammer (2) eingespeist und
die Flüssigphase abgetrennt wird
während der Filterkuchen aus den Press-Druck-Kammem (8) taktweise ausgetragen wird.

2. Verfahren nach Anspruch 1, **dadurch gekennzeichnet, dass** in der geschlossenen Press-Druck-Kammer (8) nach der Hochdruckbehandlung der erhaltene Filterkuchen gewaschen und erneut unter Hochdruck die verwendete Waschflüssigkeit abgetrennt wird:

3. Verfahren nach Anspruch 1 oder 2, **dadurch gekennzeichnet, dass** die Trennung bei hydrostatischem Druck in einer Stufe und die Behandlung des abgezogenen Restvolumens in mehreren parallelen, als Press-Druck-Kammern ausgebildeten Kammern gleichzeitig durchgeführt wird, und dass die Press-Druck-Kammern gleichzeitig geöffnet werden und der erhaltene Filterkuchen mittels eines beweglichen Filterbandes ausgetragen wird.

4. Verfahren nach Anspruch 3, **dadurch gekennzeichnet, dass** der Feststoffkuchen horizontal durch das Filterband aus der oder den Pressdruckkammern ausgetragen wird, und dass nach dem Austragen des Feststoffkuchens das Filterband gewaschen wird.

5. Vorrichtung zur Durchführung des Verfahrens nach einem der Ansprüche 1 bis 4 mit
- einer vertikalen Filtrationskammer (2) mit einer kontinuierlichen Einspeisung (4) des zu trennenden Stoffgemisches und
- mindestens einer geschlossenen, im Volumen veränderbaren Press-Druck-Kammer (8),
**dadurch gekennzeichnet, dass**
die Filtrationskammer (2) mit einer als Schneckenpresse (29) ausgebildeten Pumpvorrichtung (6) verbunden ist, die zum chargenweisen Abziehen des eingedickten Restvolumens aus der Filtrationskammer und zum Erzeugen eines Pumpendrucks in der Press-Druck-Kammer (8) von bis zu 5 bar dient, die wiederum über eine oder mehrere Verbindungsleitungen (10) mit der Press-Druck-Kammer (8) verbunden ist.
aufweist.

6. Vorrichtung nach Anspruch 5, **dadurch gekennzeichnet, dass** die Filtrationskammer (2) aus einem feststehenden Außenzylinder (12) und einem inneren drehbaren Filterkorb (14) besteht, wobei die beiden Zylinder (12, 14) unterschiedliche Durchmesser aufweisen und die geschlossene Filtrationskammer (2) bilden.

7. Vorrichtung nach Anspruch 6, **dadurch gekennzeichnet, dass** der Filterkorb (14) einen gelochten Mantel (16) aufweist, welcher mit einem Filtertuch (18) belegt ist, dass am Filterkorbzylinder (14) ein äußerer Feststoffabstreifer (20) und eine innere Kontaktbürste (22) vorgesehen sind, und dass ein Waschwasserdüsenstock (24) vorgesehen ist, um das Filtertuch (18) bei Betriebsende zu reinigen.

8. Vorrichtung nach einem der Ansprüche 5 bis 7, **dadurch gekennzeichnet, dass** jede Press-Druck-Kammer (8) als ein in sich geschlossenen kompaktes Bauteil ausgebildet ist, und dass in modularer Bauweise mehrere Press-Druck-Kammern (8) parallel zueinander an die Verbindungsleitung (10) von der Pumpvorrichtung (6) angeschlossen sind, und dass ein umlaufendes Filterband durch sämtliche Press-Druck-Kammern (8) hindurchgeführt ist.

9. Vorrichtung nach einem der Ansprüche 5 bis 8, **dadurch gekennzeichnet, dass** die Schneckenpresse (29) an sämtliche Press-Druck-Kammern (8) angeschlossen ist.

10. Vorrichtung nach einem der Ansprüche 5 bis 9, **dadurch gekennzeichnet, dass** jede Press-Druck-Kammer (8) folgende Bestandteile aufweist: eine untere feststehende Press-Druckplatte (30), eine obere feststehende Gegendruckplatte (32), eine obere heb- und senkbare Press-Druckplatte (34) mit einer umlaufenden Dichtung (36), Zuganker (50) zwischen unterer Press-Druckplatte (30) und oberer Gegendruckplatte (32) zur Übernahme der Zugkräfte und Hydraulikzylinder (38, 40, 42) zur Bewegung der oberen Press-Druckplatte (34) gemeinsam mit der Dichtung (36).

11. Vorrichtung nach einem der vorstehenden Ansprüche 5 bis 10, **dadurch gekennzeichnet, dass** die Press-Druck-Kammer (8) durch die an der oberen heb- und senkbaren Press-Druckplatte (34) befestigte ringförmige flexible Dichtung (36) umgeben ist, und dass die Dichtung (36) mittels hydraulischen Vorspannzylindern (44) in Richtung der unteren Press-Druckplatte (30) beweglich und unter Druck vorspannbar ist.

12. Vorrichtung nach einem der Ansprüche 5 bis 11, **dadurch gekennzeichnet, dass** Begrenzungszylinder (46) zur Begrenzung der Schließbewegung vorgesehen sind.

13. Vorrichtung nach einem der Ansprüche 5 bis 12, **dadurch gekennzeichnet, dass** eine Waschvorrichtung für den Feststoffkuchen vorgesehen ist.

## Claims

1. Method for the solid-liquid separation of compositions and suspensions, comprising a continuously operated filtration chamber (2) and one or more intermittently operated pressure chambers (8), in which
a) the composition or the suspension is continuously fed into the filtration chamber (2) and treated there by means of hydrostatic pressure of up to 0.2 bar, wherein from 80 to 90 % of the volume fed in is removed as a filtrate and the separation of the liquid phase is not interrupted,
b) subsequently the condensed remaining volume is drawn off by means of a screw extruder (29) and conveyed, at a pressure of up to 5 bar, into one of the pressure chambers (8) and further treated there, and
c) concludingly the remaining filtrate is separated off by means of reducing the volume of the pressure chamber (8) with a pressure of up to 50 bar, wherein the further treatment is carried out in cycles downstream of the hydrostatic filtration in the pressure chamber (8) and composition or suspension is fed into the filtration chamber (2) in a continuous and uninterrupted manner throughout the entire operating time and the liquid phase is separated off while the filter cake is discharged in cycles from the pressure chamber (8),

2. Method according to claim 1, **characterised in that**, after the high-pressure treatment, the filter cake obtained is washed and the washing liquid used is again separated off under high pressure in the closed pressure chamber (8).

3. Method according to either claim 1 or claim 2, **characterised in that** the hydrostatic pressure separation is carried out in one stage and the treatment of the drawn-off remaining volume is carried out simultaneously in a plurality of parallel chambers formed as pressure chambers, and **in that** the pressure chambers are opened simultaneously and the obtained filter cake is discharged by means of a movable filter belt.

4. Method according to claim 3, **characterised in that** the solid cake is discharged horizontally from the pressure chamber(s) by means of the filter belt, and **in that** the filter belt is washed after the solid cake has been discharged.

5. Device for carrying out the method according to any of claims 1 to 4, comprising
- a vertical filtration chamber (2) having a continuous feed (4) of the composition to be separated, and
- at least one closed pressure chamber (8) that has a variable volume,
**characterised in that**
the filtration chamber (2) is connected to a pumping device (6) that is formed as a screw extruder (29) and is used to draw off the condensed remaining volume in batches from the filter chamber and to generate a pumping pressure in the pressure chamber (8) of up to 5 bar, and that is in turn connected to the pressure chamber (8) by means of one or more connection lines (10).

6. Device according to claim 5, **characterised in that** the filtration chamber (2) consists of a stationary outer cylinder (12) and a rotatable inner filter basket (14), the two cylinders (12, 14) having different diameters and forming the closed filtration chamber (2).

7. Device according to claim 6, **characterised in that** the filter basket (14) has a perforated casing (16) that is covered with a filter cloth (18), **in that** an outer solids scraper (20) and an inner contact brush (22) are provided on the filter basket cylinder (14), and **in that** a washing water blast connection (24) is provided for cleaning the filter cloth (18) when operation is complete.

8. Device according to any of claims 5 to 7, **characterised in that** each pressure chamber (8) is designed as a coherent, compact component, and **in that** a plurality of pressure chambers (8) are connected, in parallel with one another, to the connection line (10) of the pumping device (6) in a modular construction, and **in that** a circulating filter belt is guided through all of the pressure chambers (8).

9. Device according to any of claims 5 to 8, **characterised in that** the screw extruder (29) is connected to all of the pressure chambers (8).

10. Device according to any of claims 5 to 9, **characterised in that** each pressure chamber (8) comprises the following components: a lower stationary pressure plate (30), an upper stationary counterpressure plate (32), an upper pressure plate (34) that can be raised and lowered and that comprises a peripheral seal (36), tension rods (50) between the lower pressure plate (30) and the upper counterpressure plate (32) for absorbing the tensile forces, and hydraulic cylinders (38, 40, 42) for moving the upper pressure plate (34) together with the seal (36).

11. Device according to any of the preceding claims 5 to 10, **characterised in that** the pressure chamber (8) is surrounded by the annular flexible seal (36) that is fastened to the upper pressure plate (34) that can be raised and lowered, and **in that** the seal (36) can be moved towards the lower pressure plate (30) by means of hydraulic pressurising cylinders (44) and can be pretensioned under pressure.

12. Device according to any of claims 5 to 11, **characterised in that** limiting cylinders (46) are provided for limiting the closure movement.

13. Device according to any of claims 5 to 12, **characterised in that** a washing device is provided for the solid cake.

## Revendications

1. Procédé pour la séparation solide-liquide de mélanges de substances et de suspensions avec:
une chambre de filtration (2) opérant en continu et
une ou plusieurs chambres sous pression (8) opérant en discontinu, dans le cadre duquel :
a) le mélange de substances ou la suspension est acheminé(e) en continu dans la chambre de filtration (2) et y est traité(e) sous pression hydrostatique allant jusqu'à 0,2 bar,
dans lequel 80 à 90 % du volume acheminé sont évacués en tant que filtrat et
la séparation de la phase liquide n'est pas interrompue,
b) ensuite, le volume résiduaire épaissi est retiré à travers une presse à vis (29) et transporté sous une pression jusqu'à 5 bars dans l'une des chambres sous pression (8) et y est retraité et,
c) ensuite, le filtrat restant est séparé par réduction du volume de la chambre sous pression (8) sous une pression allant jusqu'à 50 bars,
dans lequel l'autre traitement est effectué en aval de la filtration hydrostatique dans la chambre sous pression (8) de manière cyclique et,
au cours de toute la période de travail, le mélange de substances ou la suspension est acheminé(e) dans la chambre de filtration (2) en continu, sans interruption, et
la phase liquide est séparée,
tandis que le gâteau de filtre est extrait des chambres sous pression (8) de manière cyclique.

2. Procédé selon la revendication 1, **caractérisé en ce que**, dans la chambre sous pression (8) fermée, après le traitement sous haute pression, le gâteau de filtre obtenu est lavé et, à nouveau, le liquide de lavage utilisé est séparé sous haute pression.

3. Procédé selon la revendication 1 ou la revendication 2, **caractérisé en ce que** la séparation est réalisée sous pression hydrostatique en une étape et le traitement du volume résiduaire retiré est effectué dans plusieurs chambres parallèles façonnées comme des chambres sous pression simultanément, et que les chambres sous pression sont ouvertes simultanément et le gâteau de filtre obtenu est extrait au moyen d'une bande filtrante mobile.

4. Procédé selon la revendication 3, **caractérisé en ce que** le gâteau de solides est extrait horizontalement par la bande filtrante de la ou des chambres sous pression, et que, après l'extraction du gâteau de solides, la bande filtrante est lavée.

5. Dispositif de réalisation du procédé selon l'une quelconque des revendications 1 à 4, comprenant :
- une chambre de filtration verticale (2) avec un acheminement (4) en continu du mélange de substances à séparer et
- au moins une chambre sous pression (8) fermée, de volume modifiable,
**caractérisé en ce que** :
la chambre de filtration (2) est reliée à un dispositif de pompage (6) façonné comme une presse à vis (29), lequel dispositif sert au retrait par charges du volume résiduaire épaissi de la chambre de filtration et à la production d'une pression de pompage dans la chambre sous pression (8) allant jusqu'à 5 bars, et est relié à la chambre sous pression (8) à son tour via une ou plusieurs conduites de liaison (10).

6. Dispositif selon la revendication 5, **caractérisé en ce que** la chambre de filtration (2) est constituée d'un cylindre (12) externe fixe et d'une corbeille de filtre (14) interne rotative, dans lequel les deux cylindres (12, 14) présentent différents diamètres et forment la chambre de filtration fermée (2).

7. Dispositif selon la revendication 6, **caractérisé en ce que** la corbeille de filtre (14) présente une chemise perforée (16), qui est garnie d'une toile filtrante (18), que, sur le cylindre de corbeille de filtre (14), un séparateur de solides (20) externe et une brosse de contact (22) interne sont prévus, et qu'un bloc de buses d'eau de lavage (24) est prévu pour nettoyer la toile filtrante (18) en fin de fonctionnement.

8. Dispositif selon l'une quelconque des revendications 5 à 7, **caractérisé en ce que** chaque chambre sous pression (8) est façonnée comme un composant compact fermé en soi, et que plusieurs chambres sous pression (8) sont raccordées parallèlement l'une à l'autre à la conduite de liaison (10) du dispositif de pompage (6) en mode modulaire, et qu'une bande filtrante périphérique est guidée à travers toutes les chambres sous pression (8).

9. Dispositif selon l'une quelconque des revendications 5 8, **caractérisé en ce que** la presse à vis (29) est raccordée à toutes les chambres sous pression (8).

10. Dispositif selon l'une quelconque des revendications 5 à 9, **caractérisé en ce que** chaque chambre sous pression (8) présente les pièces suivantes : une plaque sous pression inférieure fixe (30), une plaque de contre-pression supérieure fixe (32), une plaque sous pression supérieure (34) relevable et abaissable avec un joint étanche périphérique (36), un tirant d'ancrage (50) entre la plaque sous pression inférieure (30) et la plaque de contre-pression supérieure (32) pour recevoir les forces de traction et un cylindre hydraulique (38, 40, 42) pour déplacer la plaque sous pression supérieure (34) conjointement avec le joint étanche (36).

11. Dispositif selon l'une quelconque des revendications 5 à 10, **caractérisé en ce que** la chambre sous pression (8) est entourée par le joint étanche (36) flexible annulaire fixé à la plaque sous pression supérieure (34) relevable et abaissable, et que le joint étanche (36) est mobile au moyen de cylindres de précontrainte hydrauliques (44) dans la direction de la plaque sous pression inférieure (30) et peut être précontraint sous pression.

12. Dispositif selon l'une quelconque des revendications 5 à 11, **caractérisé en ce que** des cylindres de limitation (46) sont prévus pour limiter le mouvement de fermeture.

13. Dispositif selon l'une quelconque des revendications 5 à 12, **caractérisé en ce qu'**il est prévu un dispositif de lavage pour le gâteau de solides.
